Europäisches Patentamt

European Patent Office

Office européen des brevets

(19)

(11) Veröffentlichungsnummer: **0 001 758**
B1

(12) **EUROPÄISCHE PATENTSCHRIFT**

(21) Anmeldenummer: **78101085.5**

(22) Anmeldetag: **06.10.78**

(51) Int. Cl³: **A 01 K 5/00, B 65 D 88/58**

(54) Vorratsbehälter für schüttfähige, portionierte Futterstoffe

(30) Priorität: **07.11.77 DE 2749717**

(43) Veröffentlichungstag der Anmeldung:
**16.05.79 Patentblatt 79/10**

(45) Bekanntmachung des Hinweises auf die Patenterteilung:
**23.07.80 Patentblatt 80/15**

(84) Benannte Vertragsstaaten:
**BE CH FR GB NL SE**

(56) Entgegenhaltungen:
**DE - B - 1 482 329**
**DE - C - 650 403**
**US - A - 2 787 404**

(73) Patentinhaber: **Gebrüder Schmeing**
**Holthausener Strasse 9**
**D - 4280 Borken-Weseke (DE)**

(72) Erfinder: **Icking, Paul**
**Klemens-August-Strasse 29**
**D - 4280 Borken 3**
**Weitenberg, Alfons**
**Am Kuhm 4**
**D - 4280 Borken 1 (DE)**

(74) Vertreter: **Habbel, Hans-Georg, Dipl.-Ing.**
**Postfach 3429 Am Kanonengraben 11**
**D - 4400 Münster (DE)**

Vorratsbehälter für schüttfähige, portionierte Futterstoffe

Die Erfindung betrifft einen Vorratsbehälter für schüttfähige, portionierte Futterstoffe für Tierfütterungsanlagen mit zwei im wesentlichen auf der Symmetrielinie des Behälterquerschnittes schwenkbar gelargerten Verschlußklappen, die einander gegenüberliegenden Freßplätzen zugeordnete Auslaßöffnungen für das aufgrund der Schwerkraft ausfließende Futter verschließen.

Eine Einrichtung der vorstehend gekennzeichneten Art ist beispielsweise aus der DE—AS 14 82 329 bekannt. Bei dieser bekannten Anordnung können die Klappen nicht wahlweise einzeln oder beide gleichzeitig betätigt werden, so daß Futterabgaben immer nur nach beiden Seiten hin möglich, sind, auch wenn auf jeder Seite das Futter unterschiedlich verteilt abgegeben werden kann. Die Klappen verschließen den bekannten Vorratsbehälter dadurch, daß sie in der Verschlußstellung in einer horizontalen Lage stehen. Würde man bei dieser bekannten Einrichtung nunmehr so vorgehen, daß auch eine Klappe allein geöffnet werden könnte, so daß also nur ein Futterplatz beschickt würde, träte der Nachteil ein, daß das Futter, das sich im Bereich der anderen Klappe innerhalb des Vorratsbehälters befände, in Anpassung an den natürlichen Schüttwinkel des Futters hier einen Futterteilrest bilden würde, der sehr schnell zu Zersetzungen und damit zu gefährlichen Fäulniserscheinungen füren würde.

Der Erfindung liegt der bekannten Vorrichtung gegenüber die Aufgabe zugrunde, einen Vorratsbehälter so auszubilden, daß mit ihm eine in ihrer Gesamtheit portionierte Futtermenge wahlweise einem oder zwei voneinander getrennten Freßplätzen zugeführt werden kann.

Diese Aufgabe wird gemäß der Erfindung dadurch gelöst, daß die Verschlußklappen wahlweise gleichzeitig oder einzeln zur Abgabe des Futters zu öffnen und — vom Vorratsbehälter aus gesehen — in der Verschlußstellung von oben außen nach unten innen derart geneigt angeordnet sind, daß die Neigung im geschlossenen Zustand dem Schüttwinkel des Futters in wesentlichen entspricht. Durch eine solche Anordnung wird die der Erfindung zugrundeliegende Aufgabe mit einfachen Mitteln gelöst.

Aus der ebenfalls vorveröffentlichten US—PS 27 87 404 ist ein Vorratsbehälter bekanntgeworden, der am unteren Ende abgeschrägt ausgebildet ist. Aufgrund der konstruktiven Ausbildung dieses Behälters ist es möglich, einen Freßplatz auf der einen Seite des Behälters zu bedienen, wobei dieser Freßplatz mit mehr oder weniger großen Futtermengen beschickt werden kann. Auch das Beschicken des auf der anderen Seite des Behälters liegenden Freßplatzes ist möglich, wobei aber ein gleichzeitiges Zuführen von Futter zu beiden Freßplätzen mit unterschiedlichen Mengen nicht möglich ist. Auch bei diesem bekannten Behälter ist das Zersetzen von im Inneren des Behälters verbleibenden Futtermengen zu befürchten.

In den Unteransprüchen sind weitere vorteilhafte Ausgestaltungen des Vorratsbehälters nach der Erfindung erläutert. Insbesondere bezieht sich die Erfindung auch auf eine im wesentlichen auf der Symmetrielinie des Behälterquerschnitts gelagerte, nach oben ragende Futterweiche, die schwenkbar und in verschiedenen. Stellungen arretierbar ist.

Ein Ausführungsbeispiel der Erfindung wird nachfolgend anhand der Zeichnungen erläutert. Es zeigen

Fig. 1 in relativ großem Maßtab das untere Ende eines rohrförmigen Vorratsbehälters,

Fig. 2 verschiedene Stellungen der den Vorratsbehälter unten verschließenden Verschlußklappen und

Fig. 3 in ebenfalls größerem Maßtab eine andere Ausführungsform des Vorratsbehälters zur Verdeutlichung der Futterweiche.

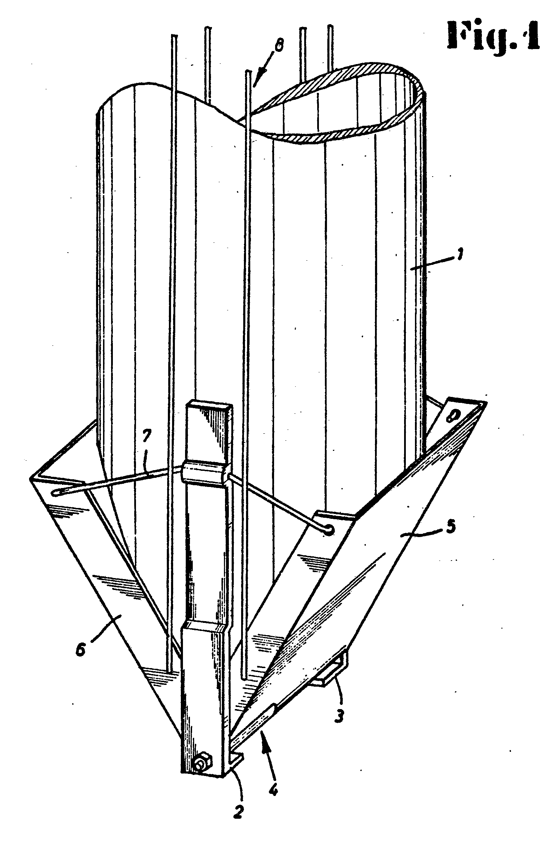

In den Zeichnungen ist allgemein mit 1 das untere Ende eines rohrförmigen Vorratsbehälters bezeichnet, der zwei Haltebügel 2, 3 aufweist, die fest an dem unteren Ende des Rohres angeordnet sind. Diese Haltebügel 2, 3 tragen eine Schwenkachse 4, auf der schwenkbar zwei Verschlußklappen 5, 6 angeordnet sind, die zwei am unteren Ende des Vorratsbehälters vorgesehene Auslaßöffnungen 14, 15 öffnen oder verschließen. Die Verschlußklappen 5, 6 können bei dem dargestellten Ausfürungsbeispiel über Halterungsmittel 7 in der in Fig. 1 dargestellten Stellung, d.h. der Verschlußstellung, gehalten werden und werden in ihre Öffnungsoder Schließstellung durch die Betätigungsseile bzw. — stangen 8 geführt.

Es ist offensichtlich, daß, wenn die Verschlußvorrichtung 7 gelöst ist, die Klappe 5 bzw. 6 in ihrer Verschlußstellung lediglich durch den entsprechenden Zug an dem Seil 8 gehalten wird, so daß bei Hochziehen des Vorratsbehälters 1 oder bei Nachgeben des Seiles 8 nunmehr sich die Klappe 5 bzw. 6 um die Schwenkachse 4 drehen kann, so daß damit die Auslaßöffnungen 14 bzw. 15 freigegeben werden, wodurch dann das im Vorratsbehälter 1 sich befindende in der Zeichnung nicht dargestellte schüttfähige, portionierte Futter aus diesem ausfließen kann.

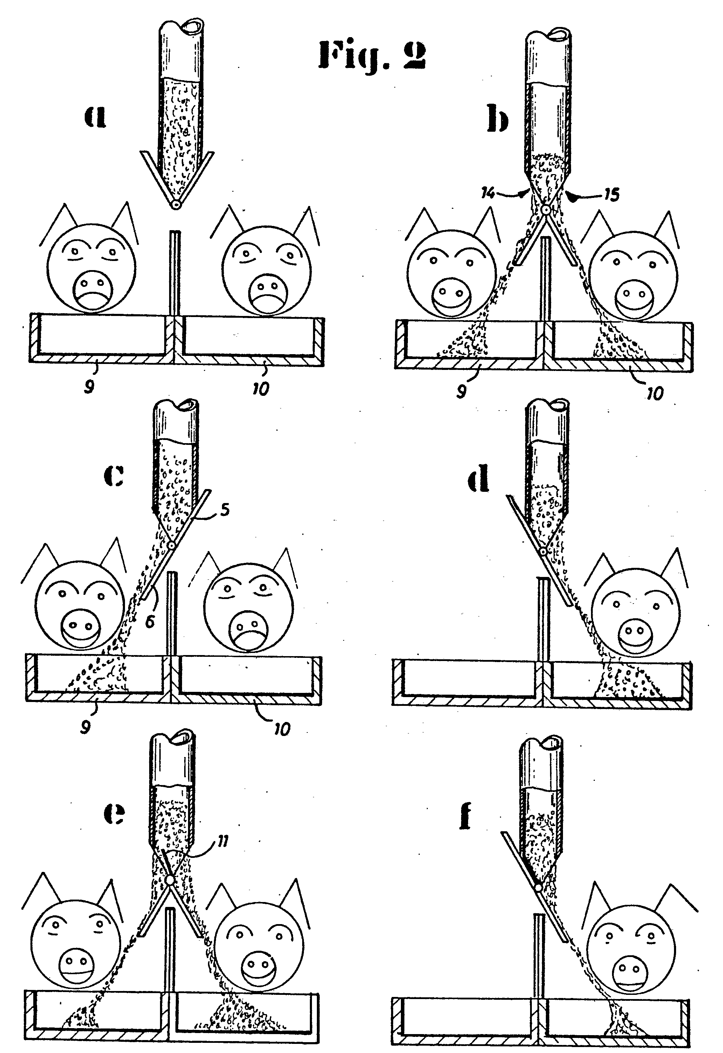

Die durch die erfindungsgemäße Aordnung erzielte Regelungsmöglichkeit ist in Fig. 2 dargestellt. In Fig. 2a ist die Stellung der Verschlußvorrichtung dargestellt, die auch in Fig. 1 dargestellt ist, d.h. der Vorratsbehälter 1 ist mit der gewünschten Futtermenge gefüllt, aber die Auslaßöffnungen 14 bzw. 15 sind über die Verschlußklappen 5 bzw. 6 verschlossen.

In Fig. 2b sind die beiden Verschlußklappen 5, 6 geöffnet, und das sich im Vorratsbehälter 1 befindende Futter kann nunmehr durch die Auslaßöffnungen 14, 15 getrennt und in gleichen Anteilen in die beiden Futtertröge 9, 10 fließen.

Bei der in Fig. 2c dargestellten Stellung der Verschlußklappen 5, 6 ist der Futtertrog 10 vom Zugang des Futters dadurch abgeschnitten, daß die Verschlußklappe 5 die Auslaßöffnung 15 verschließt, während das gesamte im Vorratsbehälter 1 befindliche Futter nunmehr bei geöffneter Verschlußklappe 6 durch die Auslaßöffnung 14 in den Futtertrog 9 fließen kann.

Es ist hier besonders deutlich erkennbar, daß auch dann, wenn ein Futtertrog nicht mit Futter beschickt wird, ein vollständiges Entleeren des Vorratsbehälters erfolgt, da die geschlossene Klappe 5 bei der Ausführungsform gemäß Fig. 2c eine Neigung aufweist, die dem Schüttwinkel des Futters entspricht, so daß garantiert ist, daß allein aufgrund der Schwerkraft ein vollständiges Ausfließen des Futters aus dem Vorratsbehälter erreicht wird. Es verbleibt somit keinerlei Rest in dem Vorratsbehälter, so daß hier sichergestellt ist, daß auch nur bei teilweiser Fütterung keine Fäulniserscheinungen in der Fütterungsanlage auftreten können und die zugemessenen im Vorratsbehälter gespeicherten Futtermengen vollständig zum Tier gelangen.

Fig. 2d läßt erkennen, daß die erfindungsgemäße Einrichtung die Möglichkeit gibt, grundsätzlich nur einen Futtertrog zu beschicken, wenn der andere Futtertrog keine Tieraufstallungen aufweist.

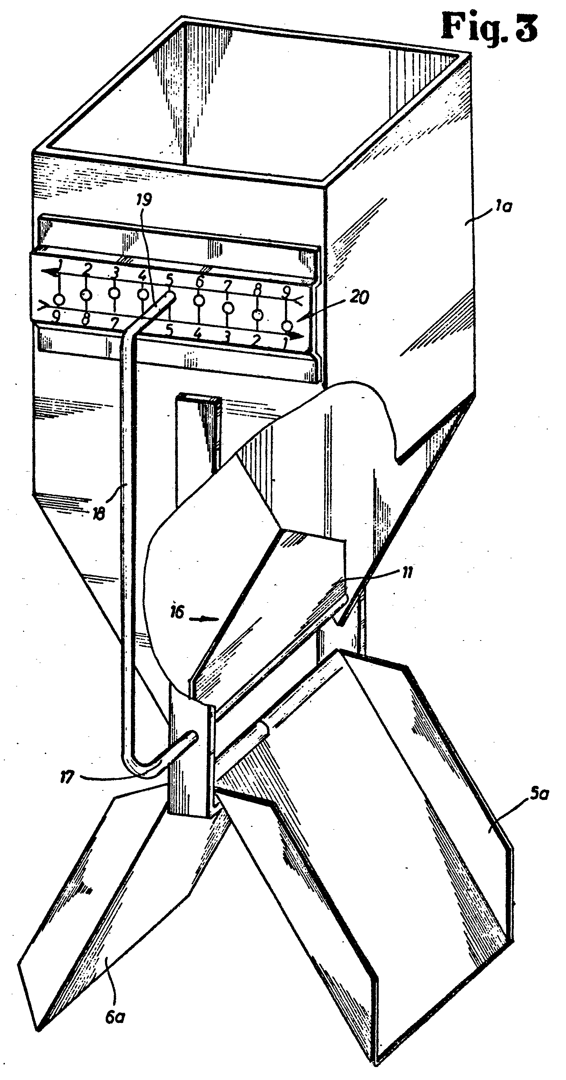

Bei den in den Fig. 2e und 2f dargestellten Ausführungsformen ist zusätzlich auf der Schwenkachse 4 eine Futterweiche 11 vorgesehen, die aus einem Dosierriegel besteht, der deutlicher in Fig. 3 dargestellt ist. Diese Futterweiche kann so eingestellt werden, daß bei voll geöffneter Verschlußklappe trotzdem nur ein Teil des sich im Vorratsbehälter befindenden Futters aus der zugeordneten Auslaßöffnung 14 oder 15 in den zugeordneten Futtertrog ausfließen kann, da diese Futterweiche den Durchflußquerschnitt des Vorratsbehälters verkleinert. Die hierdurch mögliche, verringerte (aber nicht vollständig ausgeschlossene) Futterzuführung zum einen oder anderen Futtertrog wird durch die Darstellung 2e verdeutlicht.

In Fig. 3 ist in größerem Maßstab und teilweise aufgeschnitten eine etwas andere Ausführungsform des Vorratsbehälters dargestellt, wobei dieser Vorratsbehälter mit 1a bezeichnet ist. Der Vorratsbehälter weist in Übereinstimmung mit Fig. 1 ebenfalls zwei Verschlußklappen 5a, 6a auf. Die zusätzlich zur Betätigung für die Klappen erforderlichen Hilfsmittel sind, da in Fig. 1 dargestellt, nicht noch einmal dargestellt.

Innerhalb des Vorratsbehälters ist nunmehr die in Fig. 3 deutlicher dargestellte Futterweiche 11 vorgesehen, die aus einem plattenförmigen Körper bestehen kann, der auf einer Schwenkwelle 17 fest angeordnet ist. Die Schwenkwelle 17 weist einen Betätigungsarm 18 auf, der ein Verriegelungsendteil 19 besitzt, das in entsprechende Festlegöffnungen 20 eingerastet werden kann Es ist erkennbar, daß durch Betätigen und Verschwenken des Teiles 18 nunmehr die Futterweiche 11 innerhalb des Raumes im Bereich des Ausflusses des Vorratsbehälters verstellt werden kann.

Die Futterweiche 11 ist keilförmig ausgebildet, wobei eine solche Keilgestaltung auch durch eine Vielzahl einzelner Zacken erreicht werden kann oder beispielsweise auch nur durch zwei keilförmige Schneiden. Hierdurch wird sichergestellt, daß ein Stauen des Futters durch diese keilförmige Ausbildung 16 mit Sicherheit vermieden wird.

Es ist erkennbar, daß durch die erfindungsgemäße Einrichtung ein sehr einfach ausgebildetes Hilfsmittel geschaffen wird, um mit einem einzigen Vorratsbehälter wenigstens zwei Futtertröge zu beschicken, wobei trotz dieser dadurch erreichten Vereinfachung eine Reguliermöglichkeit für die Zufuhr des Futters zum einen oder anderen Trog sichergestellt ist, d.h. es wird nicht zwangläufig die gleiche Futtermenge beiden Trögen gleichmäßig zugeführt.

**Patentansprüche**

1. Vorratsbehälter für schüttfähige, portionierte Futterstoffe für Tierfütterungsanlagen mit zwei im wesentlichen auf der Symmetrielinie des Behälterquerschnittes schwenkbar gelagerten Verschlußklappen, die einander gegenüberliegenden Freßplätzen zugeordnete Auslaßöffnungen für das aufgrund der Schwerkraft ausfließende Futter verschließen, *dadurch gekennzeichnet,* daß die Verschlußklappen (5, 6) wahlweise gleichzeitig oder einzeln zur Abgabe des Futters zu öffnen und — vom Vorratsbehälter (1) aus gesehen — in der Verschlußstellung von oben außen nach unten innen derart geneigt angeordnet sind, daß die Neigung im geschlossenen Zustand dem Schüttwinkel des Futters im wesentlichen entspricht.

2. Vorratsbehälter nach Anspruch 1, *gekennzeichnet durch* eine in wesentlichen auf der Symmetrielinie des Behälterquerschnitts gelagerte, nach oben ragende Futterweiche (11), die schwenkbar und in verschiedenen Stellungen arretierbar ist.

3. Vorratsbehälter nach Anspruch 2, *da-*

*durch gekennzeichnet,* daß die Futterweiche an ihrer oberen Kante keilförmig ausgebildet ist.

**Revendications**

1. Réservoir pour aliments du bétail déversables et portionnés, destiné à des installations de distribution de ces aliments et muni de deux trappes articulées sensiblement sur l'axe de symétrie de sa section, qui obturent des orifices de sortie associés à des mangeoires disposées l'une en face de l'autre, orifices par lesquels les aliments sont déversés par gravité, *caractérisé en ce que* les trappes (5, 6) peuvent à volonté être ouvertes, soit simultanément, soit individuellement, pour le déversement des aliments et, vues du réservoir (1), sont, en position de fermeture, inclinées du haut et de l'extérieur vers le bas et l'intérieur, de façon que leur pente corresponde sensiblement à l'angle de talus des aliments.

2. Réservoir selon la revendication 1, *caractérisé en ce* qu'il comporte un élément d'aiguillage (11), monté sensiblement sur l'axe de symétrie de la section du réservoir, qui saille vers le haut, est pivotant et peut être immobilisé dans diverses positions.

3. Réservoir selon la revendication 2, *caractérisé en ce que* l'élément d'aiguillage est en forme de coin sur son bord supérieur.

**Claims**

1. Storage container for pourable dosed feed for animal feeding installations, having two closure flaps mounted substantially to pivot about the symmetry axis of the container cross-section the flaps being adapted to close off openings through which feed can flow under gravity to two oppositely positioned feeding places *characterised in that* the closure flaps (5, 6) can selectively be opened together or singly to supply feed and — as seen from the storage container (1) — slope downwardly and inwardly so that when closed their angle of slope substantially corresponds to the flow-angle of the feed.

2. A storage container according to claim 1 *characterised by* a feed diverter mounted substantially to pivot about the symmetry axis of the container cross-section and extending upwardly therefrom, which can be locked in various pivotal positions.

3. A storage container according to claim 1 *characterised in that* the feed diverter has an upper wedge-shaped edge.

# Fig. 1

0 001 758

Fig. 2

0 001 758

Fig. 3